# EUROPEAN PATENT APPLICATION

(11) **EP 4 780 105 A1**
(43) Date of publication of application: **22.07.2026**
(21) Application number: 24870619.4
(22) Date of filing: 20.09.2024
(51) Int. Cl.: H04W 72/0446

(54) **COMMUNICATION METHOD AND APPARATUS**

(30) Priority: 28.09.2023 CN 202311291497
(71) Applicant: HUAWEI TECHNOLOGIES CO., LTD., Shenzhen 518129 (CN)
(72) Inventor: GU, Zhifang, Shenzhen, Guangdong 518129 (CN); YOU, Chunhua, Shenzhen, Guangdong 518129 (CN); FAN, Bo, Shenzhen, Guangdong 518129 (CN); YUAN, Shitong, Shenzhen, Guangdong 518129 (CN)
(74) Representative: Pfenning, Meinig & Partner mbB
(86) International application number: PCT/CN2024/120107
(87) International publication number: WO 2025/067075

(57) **Abstract**

Embodiments of this application disclose a communication method and apparatus. The method includes: determining whether a first uplink grant and a second uplink grant correspond to a same access network device, where the first uplink grant and the second uplink grant overlap in time domain positions; if the first uplink grant and the second uplink grant correspond to a same first access network device, and the second uplink grant further corresponds to a second access network device, determining a first priority of the first uplink grant and a second priority of the second uplink grant; and if the first priority is higher than the second priority, sending first data to the first access network device based on the first uplink grant, and sending second data to the second access network device based on the second uplink grant. According to embodiments of this application, communication resource utilization can be improved, and communication capacity and reliability can be improved.

## Description

This application claims priority to Chinese Patent Application No. 202311291497.2, filed with the China National Intellectual Property Administration on September 28, 2023, and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

In a mobile communication system, a plurality of transmission reception points (transmission reception points, TRPs) may provide communication services for a terminal device. Some terminal devices have a strong uplink sending capability, for example, a simultaneous transmission cross multiple panels (simultaneous transmission cross multiple panels, STxMP) user equipment (user equipment, UE), and may send uplink data to the TRPs by using two uplink grants that overlap in time domain positions. For such UEs, in a conventional technology solution, only one uplink grant with a high priority is used to send the uplink data, resulting in a decrease in communication resource utilization and reduction in communication capacity and reliability.

### SUMMARY

Embodiments of this application provide a communication method and apparatus, to improve communication resource utilization, and improve communication capacity and reliability.

According to a first aspect, an embodiment of this application provides a communication method, where the method is applied to a terminal device, or a chip or a circuit configured in the terminal device, and includes:
determining whether a first uplink grant and a second uplink grant correspond to a same access network device, where the first uplink grant and the second uplink grant overlap in time domain positions; and if the first uplink grant and the second uplink grant correspond to different access network devices, sending first data to the first access network device based on the first uplink grant, and sending second data to the second access network device based on the second uplink grant; or if the first uplink grant and the second uplink grant correspond to the same access network device, sending third data to a third access network device based on the first uplink grant, or sending fourth data to the third access network device based on the second uplink grant.

For a plurality of uplink grants that overlap in time domain positions, if the plurality of uplink grants correspond to different access network devices, uplink data may be simultaneously sent to the plurality of access network devices respectively based on the plurality of uplink grants, thereby improving communication resource utilization, and improving communication capacity and reliability.

In a possible design, the method further includes: determining whether a first identity associated with the first uplink grant is the same as a second identity associated with the second uplink grant; and if the first identity is the same as the second identity, determining that the first uplink grant and the second uplink grant correspond to the same access network device; or if the first identity is different from the second identity, determining that the first uplink grant and the second uplink grant correspond to different access network devices.

Whether the first uplink grant and the second uplink grant correspond to different access network devices is determined based on an identity of an access network device associated with an uplink grant, thereby improving accuracy of determining the uplink grant.

In a possible design, the first identity or the second identity is a control resource set pool index.

In a possible design, the method further includes: determining whether a first transmission configuration indication TCI state associated with the first uplink grant is the same as a second TCI state associated with the second uplink grant; and if the first TCI state is the same as the second TCI state, determining that the first uplink grant and the second uplink grant correspond to the same access network device; or if the first TCI state is different from the second TCI state, determining that the first uplink grant and the second uplink grant correspond to different access network devices.

Whether the first uplink grant and the second uplink grant correspond to different access network devices is determined based on a TCI state associated with an uplink grant, thereby improving accuracy of determining the uplink grant.

In a possible design, the method further includes: determining whether a first reference signal associated with the first uplink grant is the same as a second reference signal associated with the second uplink grant; and if the first reference signal is the same as the second reference signal, determining that the first uplink grant and the second uplink grant correspond to the same access network device; or if the first reference signal is different from the second reference signal, determining that the first uplink grant and the second uplink grant correspond to different access network devices.

Whether the first uplink grant and the second uplink grant correspond to different access network devices is determined based on a reference signal associated with an uplink grant, thereby improving accuracy of determining the uplink grant.

In a possible design, the method further includes: determining whether a first reference signal set associated with the first uplink grant is the same as a second reference signal set associated with the second uplink grant; and if the first reference signal set is the same as the second reference signal set, determining that the first uplink grant and the second uplink grant correspond to the same access network device; or if the first reference signal set is different from the second reference signal set, determining that the first uplink grant and the second uplink grant correspond to different access network devices.

Whether the first uplink grant and the second uplink grant correspond to different access network devices is determined based on a reference signal set associated with an uplink grant, thereby improving accuracy of determining the uplink grant.

In a possible design, the method further includes: determining a first priority of the first uplink grant and a second priority of the second uplink grant; and based on the first priority and the second priority, sending the third data to the third access network device based on the first uplink grant, or sending the fourth data to the third access network device based on the second uplink grant. When the first uplink grant and the second uplink grant correspond to the same access network device, and overlap in the time domain position, based on priorities of the first uplink grant and the second uplink grant, the uplink data is preferentially sent based on the first uplink grant or the second uplink grant, to ensure successful uplink data transmission.

In a possible design, when the first priority is higher than the second priority, the terminal device sends the third data to the third access network device based on the first uplink grant; or when the second priority is higher than the first priority, the terminal device sends the fourth data to the third access network device based on the second uplink grant.

In a possible design, the method further includes: obtaining a priority of a first logical channel of the third data and a priority of a second logical channel of the fourth data; and determining the first priority of the first uplink grant and the second priority of the second uplink grant based on the priority of the first logical channel and the priority of the second logical channel. A priority of an uplink grant is determined based on a priority of a logical channel of uplink data transmitted based on the uplink grant, and the uplink data is preferentially sent based on the priority of the uplink grant based on the first uplink grant or the second uplink grant, to ensure successful uplink data transmission.

In a possible design, the terminal device receives one uplink grant provided by the access network device, but the uplink grant corresponds to two access network devices, or corresponds to two beam directions, two TCI states, two TCI state lists, two reference signals, or two reference signal sets. In this case, that the terminal device respectively sends uplink data to the first access network device and the second access network device based on the uplink grant may be understood as that the uplink grant (denoted as a grant x) is equivalent to two uplink grants (denoted as a grant x-1 and a grant x-2), and the two uplink grants respectively correspond to the first access network device and the second access network device. When the terminal device has another uplink grant (denoted as a grant y) that overlaps the uplink grant x in time domain positions, the terminal device may alternatively send the uplink data according to the foregoing rule.

In a possible design, the first uplink grant is a dynamic uplink grant DG or a pre-configured uplink grant CG, and the second uplink grant is a DG or a CG.

According to a second aspect, an embodiment of this application provides a communication method, where the method is applied to a terminal device, or a chip or a circuit configured in the terminal device, and includes:
determining whether a first uplink grant and a second uplink grant correspond to a same first access network device, where the first uplink grant and the second uplink grant overlap in time domain positions; if the first uplink grant and the second uplink grant correspond to a same first access network device, and the second uplink grant further corresponds to a second access network device, determining a first priority of the first uplink grant and a second priority of the second uplink grant; and if the first priority is higher than the second priority, sending first data to the first access network device by using the first uplink grant, and sending second data to the second access network device by using the second uplink grant.

For a plurality of uplink grants that overlap in time domain positions, if an uplink grant with a high priority and an uplink grant with a low priority correspond to a same access network device, and the uplink grant with a low priority further corresponds to another access network device, uplink data may be sent to the another access network device by using the uplink grant with a low priority, thereby improving communication resource utilization, and improving communication capacity and reliability.

In a possible design, packet assembly may be performed based on a first parameter to obtain the second data and third data, where the first parameter indicates a size of a transport block obtained through packet assembly performed based on the second uplink grant corresponding to the first access network device and the second access network device, and the third data and the second data belong to a same transport block. Because the first uplink grant and the second uplink grant correspond to the same first access network device, and the first priority of the first uplink grant is higher than the second priority of the second uplink grant, uplink data cannot be sent to the first access network device by using the second uplink grant. The terminal device may send the first data to the first access network device by using the first uplink grant, and send the second data to the second access network device by using the second uplink grant. Subsequently, the third data is sent to the first access network device or the second access network device by using a second uplink grant in next duration of the second uplink grant.

In a possible design, because the first uplink grant and the second uplink grant correspond to the same first access network device, and the first priority of the first uplink grant is higher than the second priority of the second uplink grant, the uplink data cannot be sent by using the second uplink grant corresponding to the first access network device. The terminal device may perform packet assembly based on a second parameter to obtain the second data, where the second parameter indicates a size of a transport block obtained through packet assembly performed based on the second uplink grant corresponding to the second access network device. In this way, the first data is sent to the first access network device by using the first uplink grant, and the second data is sent to the second access network device by using the second uplink grant corresponding to the second access network device, without using the second uplink grant corresponding to the first access network device.

In a possible design, because the first uplink grant and the second uplink grant correspond to the same first access network device, and the first priority of the first uplink grant is higher than the second priority of the second uplink grant, the uplink data cannot be sent by using the second uplink grant corresponding to the first access network device. If packet assembly is performed based on the first parameter, there is a large quantity of content payloads. If the uplink data is sent only by using the second uplink grant corresponding to the second access network device, incorrect decoding may occur, resulting in a data transmission failure. Therefore, the terminal device may determine whether packet assembly performed based on the first parameter is completed. If packet assembly performed based on the first parameter is not completed, the terminal device performs packet assembly based on the second parameter to obtain the second data. In this way, the first data is sent to the first access network device by using the first uplink grant, and the second data is sent to the second access network device by using the second uplink grant corresponding to the second access network device, without using the second uplink grant corresponding to the first access network device.

In a possible design, if packet assembly performed based on the first parameter has been completed, the first data may be sent to the first access network device only by using the first uplink grant. The second uplink grant in the next duration of the second uplink grant is waited for, and if a priority of the second uplink grant in the next duration is higher than that of another uplink grant, the second data may be sent by using the second uplink grant in the next duration. Alternatively, after the second uplink grant in the next duration is waited for, the second data is preferentially sent by using the second uplink grant in the next duration. In other words, priority determining does not need to be performed again, but the second uplink grant in the next duration of the to-be-sent second data is considered as an uplink grant with a highest priority.

In a possible design, if the first uplink grant and the second uplink grant correspond to the same first access network device, the second uplink grant further corresponds to the second access network device, and the first priority of the first uplink grant is lower than or equal to the second priority of the second uplink grant, the second data is sent to the second access network device by using the second uplink grant, and fourth data is sent to the first access network device by using the second uplink grant, where the fourth data and the second data belong to a same transport block. The first data is not sent to the first access network device by using the first uplink grant, or a first uplink grant in next duration of the first uplink grant is waited for to send the first data.

In a possible design, the method further includes: determining whether a first transmission configuration indication TCI state associated with the first uplink grant is the same as a second TCI state associated with the second uplink grant; and if the first TCI state is the same as the second TCI state, determining that the first uplink grant and the second uplink grant correspond to the same access network device; or if the first TCI state is different from the second TCI state, determining that the first uplink grant and the second uplink grant correspond to different access network devices.

Whether the first uplink grant and the second uplink grant correspond to different access network devices is determined based on a TCI state associated with an uplink grant, thereby improving accuracy of determining the uplink grant.

In a possible design, the method further includes: determining whether a first reference signal associated with the first uplink grant is the same as a second reference signal associated with the second uplink grant; and if the first reference signal is the same as the second reference signal, determining that the first uplink grant and the second uplink grant correspond to the same access network device; or if the first reference signal is different from the second reference signal, determining that the first uplink grant and the second uplink grant correspond to different access network devices.

Whether the first uplink grant and the second uplink grant correspond to different access network devices is determined based on a reference signal associated with an uplink grant, thereby improving accuracy of determining the uplink grant.

In a possible design, the method further includes: determining whether a first reference signal set associated with the first uplink grant is the same as a second reference signal set associated with the second uplink grant; and if the first reference signal set is the same as the second reference signal set, determining that the first uplink grant and the second uplink grant correspond to the same access network device; or if the first reference signal set is different from the second reference signal set, determining that the first uplink grant and the second uplink grant correspond to different access network devices.

Whether the first uplink grant and the second uplink grant correspond to different access network devices is determined based on a reference signal set associated with an uplink grant, thereby improving accuracy of determining the uplink grant.

In a possible design, the first uplink grant is a dynamic uplink grant DG or a pre-configured uplink grant CG, and the second uplink grant is a DG or a CG.

According to a third aspect, an embodiment of this application provides a communication apparatus. The communication apparatus includes:
a processing module, configured to determine whether a first uplink grant and a second uplink grant correspond to a same access network device, where the first uplink grant and the second uplink grant overlap in time domain positions; and
a sending module, configured to: if the first uplink grant and the second uplink grant correspond to different access network devices, send first data to a first access network device by using the first uplink grant, and send second data to a second access network device by using the second uplink grant.

Alternatively, the sending module is further configured to: if the first uplink grant and the second uplink grant corresponding to the same access network device, send third data to a third access network device by using the first uplink grant, or send fourth data to the third access network device by using the second uplink grant.

In a possible design, the processing module is further configured to: determine whether a first identity associated with the first uplink grant is the same as a second identity associated with the second uplink grant; and if the first identity is the same as the second identity, determine that the first uplink grant and the second uplink grant correspond to the same access network device; or if the first identity is different from the second identity, determine that the first uplink grant and the second uplink grant correspond to different access network devices.

In a possible design, the first identity or the second identity is a control resource set pool index.

In a possible design, the processing module is further configured to: determine whether a first transmission configuration indication TCI state associated with the first uplink grant is the same as a second TCI state associated with the second uplink grant; and if the first TCI state is the same as the second TCI state, determine that the first uplink grant and the second uplink grant correspond to the same access network device; or if the first TCI state is different from the second TCI state, determine that the first uplink grant and the second uplink grant correspond to different access network devices.

In a possible design, the processing module is further configured to: determine whether a first reference signal associated with the first uplink grant is the same as a second reference signal associated with the second uplink grant; and if the first reference signal is the same as the second reference signal, determine that the first uplink grant and the second uplink grant correspond to the same access network device; or if the first reference signal is different from the second reference signal, determine that the first uplink grant and the second uplink grant correspond to different access network devices.

In a possible design, the processing module is further configured to: determine whether a first reference signal set associated with the first uplink grant is the same as a second reference signal set associated with the second uplink grant; and if the first reference signal set is the same as the second reference signal set, determine that the first uplink grant and the second uplink grant correspond to the same access network device; or if the first reference signal set is different from the second reference signal set, determine that the first uplink grant and the second uplink grant correspond to different access network devices.

In a possible design, the processing module is further configured to: determine a first priority of the first uplink grant and a second priority of the second uplink grant; and based on the first priority and the second priority, send the third data to the third access network device by using the first uplink grant, or send the fourth data to the third access network device by using the second uplink grant.

In a possible design, the processing module is further configured to: obtain a priority of a first logical channel of the third data and a priority of a second logical channel of the fourth data; and determine the first priority of the first uplink grant and the second priority of the second uplink grant based on the priority of the first logical channel and the priority of the second logical channel.

In a possible design, the first uplink grant is a dynamic uplink grant DG or a pre-configured uplink grant CG, and the second uplink grant is a DG or a CG.

For operations performed by the communication apparatus and beneficial effects thereof, refer to the method according to the first aspect and beneficial effects thereof. Repeated parts are not described again.

According to a fourth aspect, an embodiment of this application provides a communication apparatus. The communication apparatus includes:
a processing module, configured to determine whether a first uplink grant and a second uplink grant correspond to a same access network device, where the first uplink grant and the second uplink grant overlap in time domain positions; and
a sending module, configured to: if the first uplink grant and the second uplink grant correspond to a same first access network device, and the second uplink grant further corresponds to a second access network device, determine a first priority of the first uplink grant and a second priority of the second uplink grant.

The sending module is further configured to: if the first priority is higher than the second priority, send first data to the first access network device based on the first uplink grant, and send second data to the second access network device based on the second uplink grant.

In a possible design, the processing module is further configured to perform packet assembly based on a first parameter to obtain the second data and third data, where the first parameter indicates a size of a transport block obtained through packet assembly performed based on the second uplink grant corresponding to the first access network device and the second access network device, and the third data and the second data belong to a same transport block.

The sending module is further configured to send the third data to the first access network device or the second access network device based on a second uplink grant in next duration of the second uplink grant.

In a possible design, the processing module is further configured to perform packet assembly based on a second parameter, to obtain the second data, where the second parameter indicates a size of a transport block obtained through packet assembly performed based on the second uplink grant corresponding to the second access network device.

In a possible design, the processing module is further configured to determine whether packet assembly performed based on a first parameter is completed, where the first parameter indicates a size of a transport block obtained through packet assembly performed based on the second uplink grant corresponding to the first access network device and the second access network device; and if packet assembly performed based on the first parameter is not completed, perform packet assembly based on the second parameter to obtain the second data.

In a possible design, the sending module is further configured to: if the first priority is lower than or equal to the second priority, send the second data to the second access network device by using the second uplink grant, and send fourth data to the first access network device by using the second uplink grant, where the fourth data and the second data belong to a same transport block.

In a possible design, the processing module is further configured to: determine whether a first transmission configuration indication TCI state associated with the first uplink grant is the same as a second TCI state associated with the second uplink grant; and if the first TCI state is the same as the second TCI state, determine that the first uplink grant and the second uplink grant correspond to the same access network device; or if the first TCI state is different from the second TCI state, determine that the first uplink grant and the second uplink grant correspond to different access network devices.

In a possible design, the processing module is further configured to: determine whether a first reference signal associated with the first uplink grant is the same as a second reference signal associated with the second uplink grant; and if the first reference signal is the same as the second reference signal, determine that the first uplink grant and the second uplink grant correspond to the same access network device; or if the first reference signal is different from the second reference signal, determine that the first uplink grant and the second uplink grant correspond to different access network devices.

In a possible design, the processing module is further configured to: determine whether a first reference signal set associated with the first uplink grant is the same as a second reference signal set associated with the second uplink grant; and if the first reference signal set is the same as the second reference signal set, determine that the first uplink grant and the second uplink grant correspond to the same access network device; or if the first reference signal set is different from the second reference signal set, determine that the first uplink grant and the second uplink grant correspond to different access network devices.

In a possible design, the first uplink grant is a dynamic uplink grant DG or a pre-configured uplink grant CG, and the second uplink grant is a DG or a CG.

For operations performed by the communication apparatus and beneficial effects thereof, refer to the method according to the second aspect and beneficial effects thereof. Repeated parts are not described again.

According to a fifth aspect, this application provides a communication apparatus. The communication apparatus includes a processor and a memory. The memory is configured to store a computer program. The processor is configured to execute the computer program stored in the memory, to cause the communication apparatus to perform the method according to any one of the first aspect and the second aspect.

According to a sixth aspect, this application provides a communication apparatus. The apparatus may be a terminal device, an apparatus in the terminal device, or an apparatus that can be used together with the terminal device. The communication apparatus may alternatively be a chip system. The communication apparatus may perform the method according to the first aspect and the second aspect. A function of the communication apparatus may be implemented by hardware, or may be implemented by hardware executing corresponding software. The hardware or the software includes one or more modules corresponding to the function. The module may be software and/or hardware. For operations performed by the communication apparatus and beneficial effect thereof, refer to the method according to the first aspect and the second aspect and beneficial effect thereof. Repeated parts are not described again.

According to a seventh aspect, this application provides a computer-readable storage medium. The computer-readable storage medium is configured to store a computer program, and when the computer program is executed, the method according to any one of the first aspect and the second aspect is implemented.

According to an eighth aspect, this application provides a computer program product including a computer program. When the computer program is executed, the method according to any one of the first aspect and the second aspect is implemented.

According to a ninth aspect, an embodiment of this application provides a communication system. The communication system includes at least one terminal device and at least one access network device, and the terminal device is configured to perform steps according to the first aspect and the second aspect.

According to a tenth aspect, a chip is provided. The chip includes a processor and a communication interface, the communication interface is configured to communicate with an external component or an internal component, and the processor is configured to implement the method according to the foregoing aspects.

In a possible design, the chip may further include a memory, the memory stores a computer program or instructions, and the processor is configured to execute the computer program or the instructions stored in the memory, or another program or instruction. When the computer program or the instructions are executed, the processor is configured to implement the method according to the foregoing aspects.

In a possible design, the chip may be integrated into a terminal device.

### BRIEF DESCRIPTION OF DRAWINGS

To describe the technical solutions in embodiments of this application or in the background more clearly, the following briefly describes accompanying drawings for describing embodiments of this application or the background.
FIG. 1 is a diagram of an architecture of a communication system according to an embodiment of this application;
FIG. 2 is a diagram of a multi-TRP communication scenario;
FIG. 3 is a diagram of uplink transmission;
FIG. 4a is a diagram of an operating mode;
FIG. 4b is a diagram of another operating mode;
FIG. 5 is a schematic flowchart of a communication method according to an embodiment of this application;
FIG. 6 is a diagram of a type of uplink data transmission;
FIG. 7 is a schematic flowchart of a communication method according to an embodiment of this application;
FIG. 8 is a diagram of another type of uplink data transmission;
FIG. 9 is a diagram of another type of uplink data transmission;
FIG. 10 is a diagram of a structure of a communication apparatus according to an embodiment of this application; and
FIG. 11 is a diagram of a structure of a terminal device according to an embodiment of this application.

### DESCRIPTION OF EMBODIMENTS

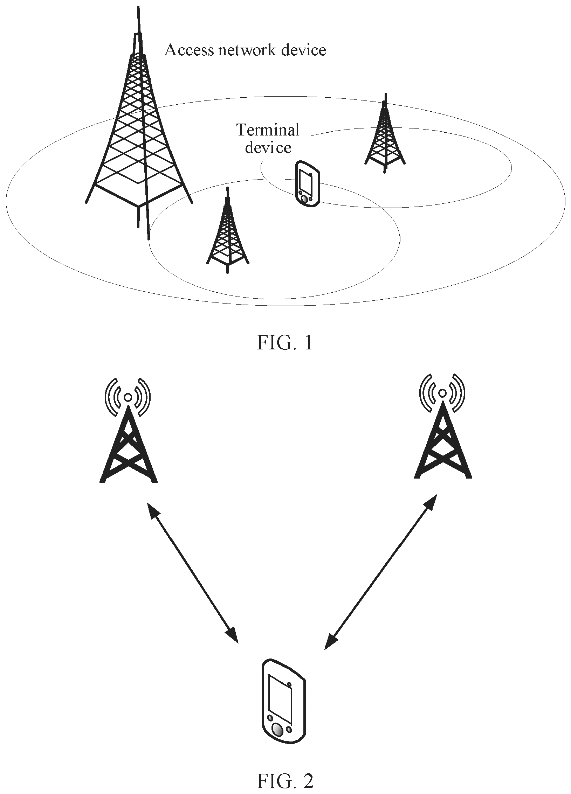

FIG. 1 is a diagram of an architecture of a communication system according to an embodiment of this application. The communication system includes an access network device and a terminal device. The access network device may include a primary base station and a secondary base station, and coverage of serving cells (carriers) of one or more secondary base stations is within coverage of the primary base station. The terminal device may be located in coverage of one or more serving cells provided by the access network device. When there are a plurality of cells that provide services for the terminal device, the terminal device may operate in a carrier aggregation (carrier aggregation, CA), dual connectivity (dual Connectivity, DC), or coordinated multi-point transmission manner. The one or more serving cells provide at least one numerology (numerology), and simultaneously provide a radio resource for the terminal device.

The terminal device may be referred to as a user equipment (user equipment, UE), a mobile station (mobile station, MS), a mobile terminal (mobile terminal, MT), or the like, and is a device that provides voice and/or data connectivity for a user, for example, a handheld device or a vehicle-mounted device having a wireless connection function. Currently, examples of some terminals are: a mobile phone (mobile phone), a tablet computer, a notebook computer, a handheld computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in remote medical surgery (remote medical surgery), a wireless terminal in smart grid (smart grid), a wireless terminal in transportation safety (transportation safety), a wireless terminal in a smart city (smart city), a wireless terminal in a smart home (smart home), or the like. The following uses an example in which the terminal device is a UE for description.

The access network device is a radio access network (radio access network, RAN) node (or device) that connects the terminal device to a wireless network, and may also be referred to as a base station. Currently, examples of some RAN nodes are: a continuously evolved NodeB (gNB), a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or home NodeB, HNB), a baseband unit (baseband unit, BBU), a wireless fidelity (wireless fidelity, Wi-Fi) access point (access point, AP), or the like. In addition, in a network structure, the access network device may include a central unit (central unit, CU) node, a distributed unit (distributed unit, DU) node, or a RAN device including a CU node and a DU node. The RAN device including the CU node and the DU node splits protocol layers of an eNB in a long term evolution (long term evolution, LTE) system. Functions of some protocol layers are centrally controlled by the CU, functions of some or all of the remaining protocol layers are distributed in the DU, and the CU centrally controls the DU.

The communication system is applicable to a long term evolution (long term evolution, LTE) system, a universal mobile telecommunications system (universal mobile telecommunications system, UMTS), a code division multiple access (code division multiple access, CDMA) system, a wireless local area network (wireless local area network, WLAN), a fifth generation mobile communication system (fifth generation, 5G), a next generation wireless communication system, or the like.

The following uses a terminal device as a UE and an access network device as a TRP for description.

FIG. 2 is a diagram of a multi-TRP communication scenario. In a mobile communication system, a UE may be provided with communication services by a plurality of TRPs (for example, a plurality of TRPs), and the plurality of TRPs may communicate with each other. The UE performs data receiving and sending operations with the plurality of TRPs in different beam directions. If the UE (such as an STxMP UE) has a capability of simultaneously sending uplink signals in different beam directions, the UE may simultaneously perform uplink transmission with the plurality of TRPs. When to-be-transmitted uplink signals corresponding to different TRPs overlap in time domain, how the UE selects a to-be-transmitted uplink signal is worth studying.

A single-TRP communication scenario is used as an example. The UE may send uplink data to a TRP based on an uplink grant (UL grant). The uplink grant indicates a time domain position, a frequency domain position, a size of a transport block, and the like that are used when the UE sends the uplink data. The uplink grant may include a dynamic uplink grant (dynamic UL grant, DG) and a pre-configured uplink grant (pre-configured UL grant, CG). The DG is provided by the TRP for the UE through a physical downlink control channel (physical downlink control channel, PDCCH), and a moment at which the UE uses the DG may be dynamically indicated by the TRP. The CG is a periodic resource, and the TRP indicates a parameter such as a periodicity of the CG to the UE by using radio resource control (radio resource control, RRC) signaling, that is, a moment at which the UE uses the CG is static, and a use opportunity occurs periodically. A periodic CG uplink grant resource may also be referred to as a CG opportunity/occasion (occasion).

When the UE determines that a CG and a DG overlap in time domain resources, because some UEs have a capability of sending uplink data only based on one uplink grant, or the TRP can successfully receive the uplink data only on one uplink grant resource, the UE needs to select one uplink grant for sending (for example, the uplink grant has a high priority), and temporarily does not use the other uplink grant (for example, the uplink grant has a low priority). This process is referred to as an intra-UE prioritization (intra-UE prioritization) technology.

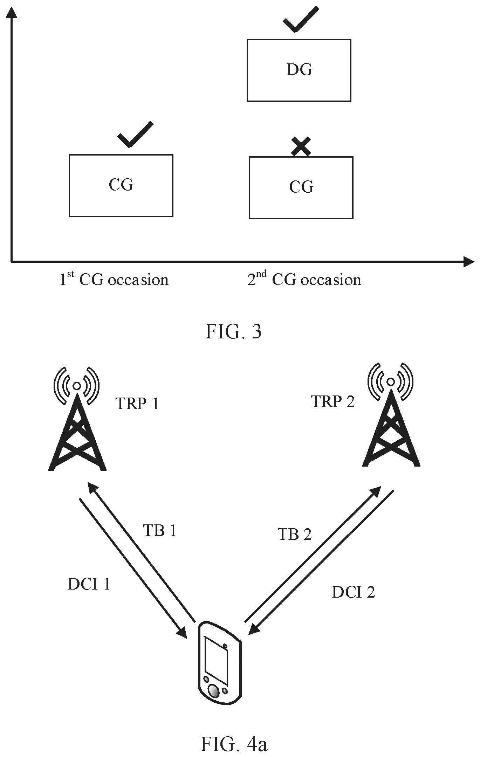

For example, FIG. 3 is a diagram of uplink transmission. On a 1^{st} CG occasion, the UE sends uplink data based on the CG. The uplink data may be a media access control (media access control, MAC) protocol data unit (protocol data unit, PDU) #1. Then, on a 2^{nd} CG occasion, the UE may send uplink data (a MAC PDU #2) based on a DG and send uplink data (a MAC PDU #3) based on a CG. However, because the CG and the DG overlap in time domain, the intra-UE prioritization technology is performed. If a priority of the MAC PDU #2 corresponding to the DG is higher than a priority of the MAC PDU #3 corresponding to the CG, the UE considers that the DG has a high priority, and sends the MAC PDU #2 based on the DG; and considers that the CG has a low priority, and does not use this CG occasion.

The UE determines a priority of an uplink grant based on data included in a MAC PDU. For example, the MAC PDU #2 includes data of a logical channel (logical Channel, LCH) 1, the MAC PDU #3 includes data of an LCH 5, and a priority may be pre-configured for each LCH. For example, a priority of the LCH 1 is pre-configured to be higher than a priority of the LCH 5. Therefore, the UE may determine, based on the priorities of the LCHs, that the priority of the MAC PDU #2 is higher than the priority of the MAC PDU #3, and further determine that a priority of an uplink grant corresponding to the MAC PDU #2 is higher than a priority of an uplink grant corresponding to the MAC PDU #3. Further, the UE sends the uplink data by using the uplink grant with a high priority.

Some terminal devices have a strong uplink sending capability, for example, an STxMP UE, and may send uplink data to TRPs by using two uplink grants that overlap in time domain positions. For such UEs, if the foregoing technical solution is used, only one uplink grant with a high priority is used to send the uplink data, resulting in a decrease in communication resource utilization and reduction in communication capacity and reliability.

The following describes two operating modes in a multi-TRP communication scenario.

Operating mode 1: Each antenna panel of a UE can send a complete transport block (transport block, TB), which is referred to as a codeword (codeword) or referred to as a MAC PDU. The following uses a transport block as a TB for description. After receiving one TB, each TRP can perform receiving and decoding operations on the received TB. FIG. 4a is a diagram of an operating mode. A TRP 1 provides an uplink grant 1 to a UE by using downlink control information (downlink control information, DCI) 1, where the DCI is carried on a physical downlink control channel (physical downlink control channel, PDCCH). A TRP 2 provides an uplink grant 2 to the UE by using DCI 2. The UE sends uplink data TB 1 to the TRP 1 based on the uplink grant 1, and the UE sends uplink data TB 2 to the TRP based on the uplink grant 2.

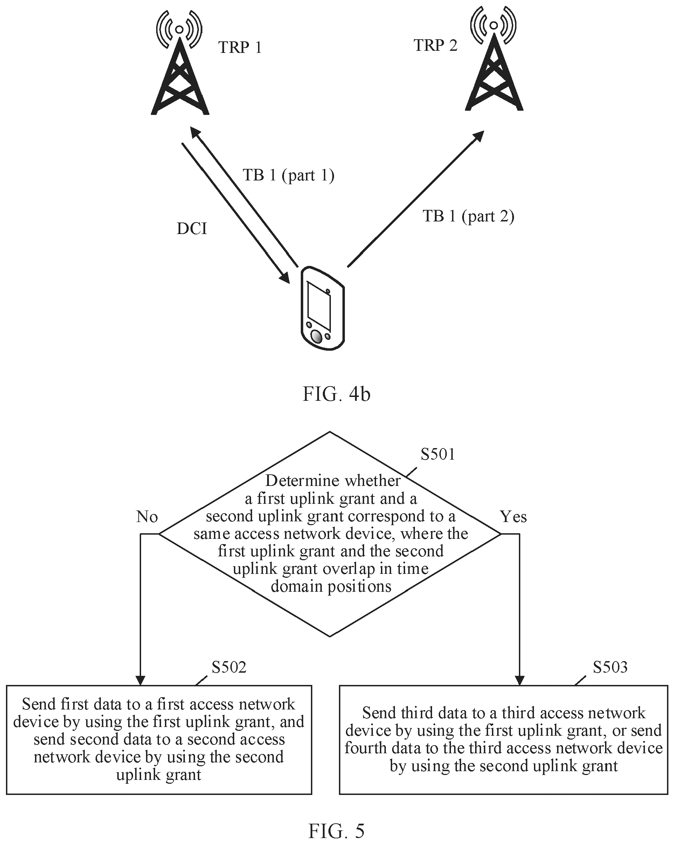

Operating mode 2: A plurality of antenna panels of the UE send one TB in a coordinated manner. For example, a complete TB is divided into two data streams. The UE uses two antenna panels to respectively send a first stream of the TB and a second stream of the TB. After a TRP 1 receives the first stream and a TRP 2 receives the second stream, the TRP 1 and the TRP 2 combine the first stream and the second stream to restore the complete TB for decoding. FIG. 4b is a diagram of another operating mode. The TRP 1 sends an uplink grant to the UE by using DCI, where the uplink grant includes an uplink grant corresponding to the TRP 1 (a CG to the TRP 1) and an uplink grant corresponding to the TRP 2 (a CG to the TRP 2). The UE sends a first stream (a part 1 in the figure, a first part) of a TB 1 based on the uplink grant corresponding to the TRP 1, and sends a second stream (a part 2 in the figure, a second part) of the TB 1 based on the uplink grant corresponding to the TRP 2. If only the TRP 1 receives the first stream of the TB 1, but the TRP 2 does not receive the second stream of the TB 1, the TRP 1 and the TRP 2 cannot combine the first stream and the second stream to obtain the complete TB 1, resulting in a data transmission failure. Similarly, if only the TRP 2 receives the second stream of the TB 1, but the TRP 1 does not receive the first stream of the TB 1, also resulting in a data transmission failure.

FIG. 5 is a schematic flowchart of a communication method according to an embodiment of this application. This embodiment of this application may be performed by a terminal device. The terminal device performs data transmission in Operating mode 1. In other words, each antenna panel of the terminal device sends a complete transport block. The method mainly includes the following steps.

S501: Determine whether a first uplink grant and a second uplink grant correspond to a same access network device, where the first uplink grant and the second uplink grant overlap in time domain positions.

In an implementation, it may be determined whether a first identity (identity, ID) associated with the first uplink grant is the same as a second identity associated with the second uplink grant. If the first identity is the same as the second identity, it is determined that the first uplink grant and the second uplink grant correspond to the same access network device. If the first identity is different from the second identity, it is determined that the first uplink grant and the second uplink grant correspond to different access network devices.

The first identity or the second identity is identity information of an access network device. For example, the first identity or the second identity is a control resource set pool index (control resource set pool index, CoresetPoolIndex), and one access network device corresponds to one CoresetPoolIndex.

In another implementation, it is determined whether a first transmission configuration indication (transmission configuration indication, TCI) state (state) associated with the first uplink grant is the same as a second TCI state associated with the second uplink grant. If the first TCI state is the same as the second TCI state, it is determined that the first uplink grant and the second uplink grant correspond to the same access network device. If the first TCI state is different from the second TCI state, it is determined that the first uplink grant and the second uplink grant correspond to different access network devices.

The first TCI state may indicate a beam direction associated with the first uplink grant, and the second TCI state may indicate a beam direction associated with the second uplink grant. Different beam directions correspond to different access network devices, and a same beam direction corresponds to a same access network device. For example, a TRP 1 corresponds to a TCI state #1 or a TCI state list (List) #1, and a TRP 2 corresponds to a TCI state #2 or a TCI state list #2. When a TCI state associated with an uplink grant 1 is different from a TCI state associated with an uplink grant 2, or when the uplink grant 1 and the uplink grant 2 are in different TCI state lists, a UE determines that the uplink grant 1 and the uplink grant 2 correspond to different beam directions, that is, correspond to different TRPs. When the TCI state associated with the uplink grant 1 is the same as the TCI state associated with the uplink grant 2, or when the uplink grant 1 and the uplink grant 2 are in a same TCI state list, the UE determines that the uplink grant 1 and the uplink grant 2 correspond to a same beam direction, that is, correspond to a same TRP.

In another implementation, it is determined whether a first reference signal associated with the first uplink grant is the same as a second reference signal associated with the second uplink grant. If the first reference signal is the same as the second reference signal, it is determined that the first uplink grant and the second uplink grant correspond to the same access network device. If the first reference signal is different from the second reference signal, it is determined that the first uplink grant and the second uplink grant correspond to different access network devices.

A reference signal may include a downlink reference signal and an uplink reference signal. The downlink reference signal may be a synchronization signal and physical broadcast channel block (synchronization signal and physical broadcast channel block, SSB) or a channel state information reference signal (channel state information reference signal, CSI-RS), and the uplink reference signal may be a sounding reference signal (sounding reference signal, SRS). For example, the uplink grant 1 is associated with an SSB 1, and the uplink grant 2 is associated with an SSB 2. If the SSB 1 is the same as the SSB 2, the uplink grant 1 and the uplink grant 2 correspond to a same TRP. If the SSB 1 is different from the SSB 2, the uplink grant 1 and the uplink grant 2 correspond to different TRPs.

In another implementation, it is determined whether a first reference signal set associated with the first uplink grant is the same as a second reference signal set associated with the second uplink grant. If the first reference signal set is the same as the second reference signal set, it is determined that the first uplink grant and the second uplink grant correspond to the same access network device. If the first reference signal set is different from the second reference signal set, it is determined that the first uplink grant and the second uplink grant correspond to different access network devices.

For example, the uplink grant 1 is associated with an SSB list 1, and the uplink grant 2 is associated with an SSB list 2. If the SSB list 1 and the SSB list 2 are a same SSB list, the uplink grant 1 and the uplink grant 2 correspond to a same TRP. If the SSB list 1 and the SSB list 2 are different SSB lists, the uplink grant 1 and the uplink grant 2 correspond to different TRPs.

That the first uplink grant and the second uplink grant overlap in the time domain positions indicates that duration (duration) of the first uplink grant and duration (duration) of the second uplink grant overlap or partially overlap.

The first uplink grant is a DG or a CG, and the second uplink grant is a DG or a CG.

S502: If the first uplink grant and the second uplink grant correspond to different access network devices, the terminal device sends first data to a first access network device based on the first uplink grant, and sends second data to a second access network device based on the second uplink grant. The first uplink grant corresponds to the first access network device, and the second uplink grant corresponds to the second access network device.

It may be understood that if a plurality of uplink grants overlap in time domain positions, and the plurality of uplink grants correspond to different access network devices, uplink data may be simultaneously sent to a plurality of access network devices respectively based on the plurality of uplink grants.

It may alternatively be understood that if a plurality of uplink grants overlap in time domain positions, and the plurality of uplink grants correspond to different access network devices, the terminal device does not need to determine priorities of the plurality of uplink grants, and may simultaneously send uplink data to a plurality of access network devices respectively based on the plurality of uplink grants.

S503: If the first uplink grant and the second uplink grant correspond to the same access network device, the terminal device sends third data to a third access network device based on the first uplink grant, or sends fourth data to the third access network device based on the second uplink grant. Both the first uplink grant and the second uplink grant correspond to the third access network device.

Specifically, a first priority of the first uplink grant and a second priority of the second uplink grant may be determined. Based on the first priority and the second priority, the third data is sent to the third access network device based on the first uplink grant, or the fourth data is sent to the third access network device based on the second uplink grant. Further, when the first priority is higher than the second priority, the terminal device sends the third data to the third access network device based on the first uplink grant; or when the second priority is higher than the first priority, the terminal device sends the fourth data to the third access network device based on the second uplink grant.

Further, a priority of a first logical channel of the third data and a priority of a second logical channel of the fourth data may be obtained, and the first priority of the first uplink grant and the second priority of the second uplink grant may be determined based on the priority of the first logical channel and the priority of the second logical channel. If the priority of the first logical channel is higher than the priority of the second logical channel, the first priority of the first uplink grant is higher than the second priority of the second uplink grant. If the priority of the first logical channel is lower than the priority of the second logical channel, the first priority of the first uplink grant is lower than the second priority of the second uplink grant. For a manner of determining the first priority of the first uplink grant and the second priority of the second uplink grant, refer to the foregoing descriptions. Details are not described herein again.

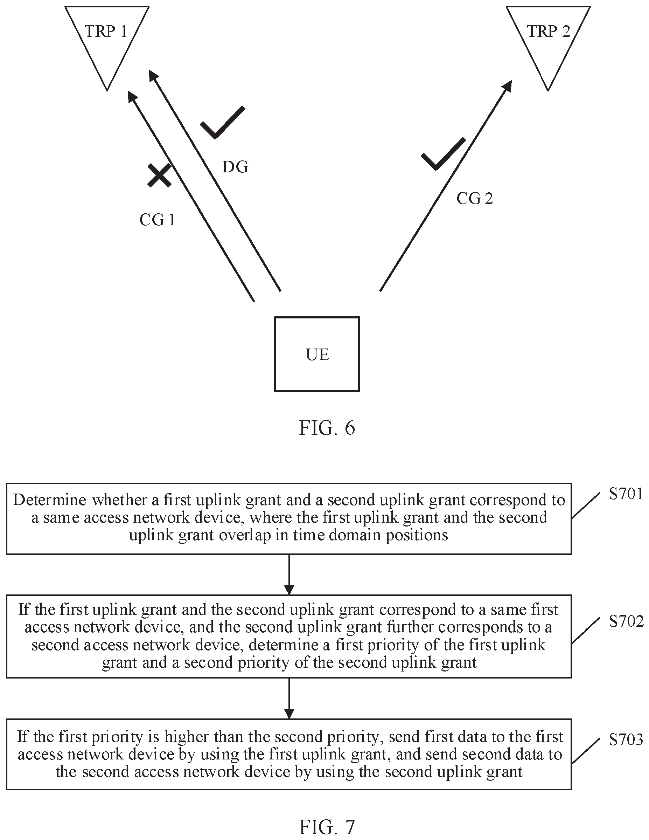

FIG. 6 is a diagram of uplink data transmission. A UE has three uplink grants, that is, a DG, a CG 1, and a CG 2, and the three uplink grants, that is, the DG, the CG 1, and the CG 2 overlap in time domain positions. The UE determines that the DG corresponds to a TRP 1, the CG 1 corresponds to the TRP 1, and the CG 2 corresponds to a TRP 2. Because the DG and the CG 1 correspond to the same TRP 1, one of the uplink grants needs to be selected to send data. Therefore, a priority of the DG and a priority of the CG 1 may be determined. When it is determined that the priority of the DG is higher than the priority of the CG 1, the UE may send uplink data to the TRP 1 by using the DG. Because there is no uplink grant that corresponds to the TRP 2 and that overlaps the CG 2 corresponding to the TRP 2 in time domain positions, the UE may send the uplink data to the TRP 2 by using the CG 2.

Optionally, if the first uplink grant and the second uplink grant do not overlap in the time domain positions, the terminal device may send the first data to the first access network device based on the first uplink grant, and send the second data to the second access network device based on the second uplink grant. In other words, when the plurality of uplink grants do not overlap in time domain positions, regardless of whether the plurality of uplink grants correspond to a same access network device, uplink data may be sent to the access network device based on the plurality of uplink grants.

It should be understood that in Operating mode 1, the terminal device may respectively send uplink data to the first access network device and the second access network device based on two uplink grants. In a possible implementation, an access network device may provide one uplink grant for the terminal device, but the uplink grant corresponds to two access network devices, or corresponds to two beam directions, two TCI states, two TCI state lists, two reference signals, or two reference signal sets. In this case, that the terminal device respectively sends uplink data to the first access network device and the second access network device based on the uplink grant may be understood as that the uplink grant (denoted as a grant x) is equivalent to two uplink grants (denoted as a grant x-1 and a grant x-2), and the two uplink grants respectively correspond to the first access network device and the second access network device. When the terminal device has another uplink grant (denoted as a grant y) that overlaps the uplink grant x in time domain positions, the terminal device may also use a rule in this embodiment of this application to determine, by using S501, access network devices corresponding to the uplink grant x-1, the uplink grant x-2, and the uplink grant y, and then perform an action in S502 or S503.

In this embodiment of this application, for a plurality of uplink grants that overlap in time domain positions, if the plurality of uplink grants correspond to different access network devices, uplink data may be simultaneously sent to a plurality of access network devices respectively based on the plurality of uplink grants, thereby improving communication resource utilization, and improving communication capacity and reliability.

FIG. 7 is a schematic flowchart of a communication method according to an embodiment of this application. This embodiment of this application may be performed by a terminal device. The terminal device performs data transmission in Operating mode 2. In other words, a plurality of antenna panels of the terminal device send a transport block in a coordinated manner. The method mainly includes the following steps.

S701: Determine whether a first uplink grant and a second uplink grant correspond to a same access network device, where the first uplink grant and the second uplink grant overlap in time domain positions.

In an implementation, it is determined whether a first TCI state associated with the first uplink grant is the same as a second TCI state associated with the second uplink grant. If the first TCI state is the same as the second TCI state, it is determined that the first uplink grant and the second uplink grant correspond to the same access network device. If the first TCI state is different from the second TCI state, it is determined that the first uplink grant and the second uplink grant correspond to different access network devices.

The first TCI state may indicate a beam direction associated with the first uplink grant, and the second TCI state may indicate a beam direction associated with the second uplink grant. Different beam directions correspond to different access network devices, and a same beam direction corresponds to a same access network device. For example, a TRP 1 corresponds to a TCI state #1 or a TCI state list (List) #1, and a TRP 2 corresponds to a TCI state #2 or a TCI state list #2. When a TCI state associated with an uplink grant 1 is different from a TCI state associated with an uplink grant 2, or when the uplink grant 1 and the uplink grant 2 are in different TCI state lists, a UE determines that the uplink grant 1 and the uplink grant 2 correspond to different beam directions, that is, correspond to different TRPs. When the TCI state associated with the uplink grant 1 is the same as the TCI state associated with the uplink grant 2, or when the uplink grant 1 and the uplink grant 2 are in a same TCI state list, the UE determines that the uplink grant 1 and the uplink grant 2 correspond to a same beam direction, that is, correspond to a same TRP.

In another implementation, it is determined whether a first reference signal associated with the first uplink grant is the same as a second reference signal associated with the second uplink grant. If the first reference signal is the same as the second reference signal, it is determined that the first uplink grant and the second uplink grant correspond to the same access network device. If the first reference signal is different from the second reference signal, it is determined that the first uplink grant and the second uplink grant correspond to different access network devices.

A reference signal may include a downlink reference signal and an uplink reference signal. The downlink reference signal may be a synchronization signal and physical broadcast channel block (synchronization signal and physical broadcast channel block, SSB) or a channel state information reference signal (channel state Information reference signal, CSI-RS), and the uplink reference signal may be a sounding reference signal (sounding reference signal, SRS). For example, the uplink grant 1 is associated with an SSB 1, and the uplink grant 2 is associated with an SSB 2. If the SSB 1 is the same as the SSB 2, the uplink grant 1 and the uplink grant 2 correspond to a same TRP. If the SSB 1 is different from the SSB 2, the uplink grant 1 and the uplink grant 2 correspond to different TRPs.

In another implementation, it is determined whether a first reference signal set associated with the first uplink grant is the same as a second reference signal set associated with the second uplink grant. If the first reference signal set is the same as the second reference signal set, it is determined that the first uplink grant and the second uplink grant correspond to the same access network device. If the first reference signal set is different from the second reference signal set, it is determined that the first uplink grant and the second uplink grant correspond to different access network devices.

For example, the uplink grant 1 is associated with an SSB list 1, and the uplink grant 2 is associated with an SSB list 2. If the SSB list 1 and the SSB list 2 are a same SSB list, the uplink grant 1 and the uplink grant 2 correspond to a same TRP. If the SSB list 1 and the SSB list 2 are different SSB lists, the uplink grant 1 and the uplink grant 2 correspond to different TRPs.

That the first uplink grant and the second uplink grant overlap in the time domain positions indicates that duration (duration) of the first uplink grant and duration (duration) of the second uplink grant overlap or partially overlap.

The first uplink grant is a DG or a CG, and the second uplink grant is a DG or a CG.

S702: If the first uplink grant and the second uplink grant correspond to a same first access network device, and the second uplink grant further corresponds to a second access network device, determine a first priority of the first uplink grant and a second priority of the second uplink grant.

Optionally, if the first uplink grant and the second uplink grant correspond to different access network devices, first data may be sent to the first access network device based on the first uplink grant, and second data may be sent to the second access network device based on the second uplink grant. In other words, for a plurality of uplink grants that overlap in time domain positions, if the plurality of uplink grants correspond to different access network devices, uplink data may be simultaneously sent to a plurality of access network devices respectively based on the plurality of uplink grants.

S703: If the first priority is higher than the second priority, send the first data to the first access network device based on the first uplink grant, and send the second data to the second access network device based on the second uplink grant.

In an implementation, packet assembly may be performed based on a first parameter to obtain the second data and third data. The first parameter indicates a size of a transport block obtained through packet assembly performed based on the second uplink grant corresponding to the first access network device and the second access network device. The third data and the second data belong to a same transport block. Because the first uplink grant and the second uplink grant correspond to the same first access network device, and the first priority of the first uplink grant is higher than the second priority of the second uplink grant, uplink data cannot be sent to the first access network device based on the second uplink grant. The terminal device may send the first data to the first access network device based on the first uplink grant, and send the second data to the second access network device based on the second uplink grant. Subsequently, the third data is sent to the first access network device or the second access network device based on a second uplink grant in next duration of the second uplink grant. The first parameter may be configured by an access network device by using an RRC message or indicated by using DCI, and the first parameter includes at least one of the following: a size of a TB and a modulation and coding scheme.

The second uplink grant may be a periodic resource. For example, the second uplink grant is a CG. The second uplink grant in the next duration is an uplink grant resource in a next periodicity. The second uplink grant in the next duration may be a next uplink grant corresponding to a same hybrid automatic repeat request (hybrid automatic repeat request, HARQ) process ID. For example, a CG occasion 1 is a resource in a 1^{st} periodicity, and corresponds to a HARQ process 1; and a CG occasion 2 is a resource in a 2^{nd} periodicity, and corresponds to a HARQ process 2. However, because the CG occasion 1 and the CG occasion 2 correspond to different HARQ processes, the UE does not use the CG occasion 2 to send the third data, and needs to wait for a resource (for example, a CG occasion 3) in a 3^{rd} periodicity. If the CG occasion 3 corresponds to the HARQ process 1, the third data may be sent by using the CG occasion 3.

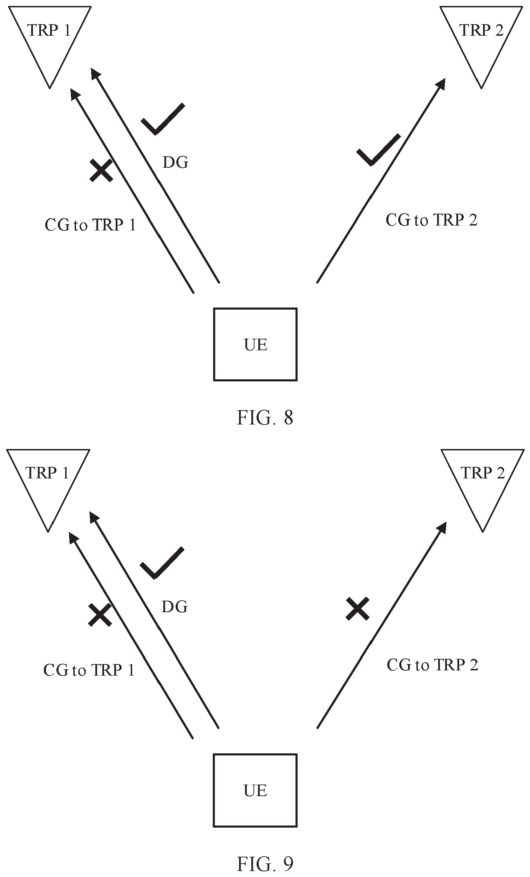

FIG. 8 is a diagram of another type of uplink data transmission. A UE has two uplink grants, that is, a DG and a CG, and the DG and the CG overlap in time domain positions. The UE determines that the DG corresponds to a TRP 1, and the CG 1 corresponds to the TRP 1 and a TRP 2. The UE performs packet assembly based on the DG to obtain a TB 1, and performs packet assembly based on the CG to the TRP 1 and the CG to the TRP 2 to obtain a first stream of a TB 2 and a second stream of the TB 2. Because the CG and the DG correspond to the same TRP 1, and a priority of the DG is higher than a priority of the CG, in current duration, the UE may send the TB 1 to the TRP 1 based on the DG, and send the second stream of the TB 2 to the TRP 2 based on the CG to the TRP 2, but the UE cannot send the first stream of the TB 2 to the TRP 1 based on the CG to the TRP 1. The UE may wait for next duration to send the first stream of the TB 2 to the TRP 1 based on the CG to the TRP 1, or send the first stream of the TB 2 to the TRP 2 based on the CG to the TRP 2.

In another implementation, because the first uplink grant and the second uplink grant correspond to the same first access network device, and the first priority of the first uplink grant is higher than the second priority of the second uplink grant, uplink data cannot be sent based on the second uplink grant corresponding to the first access network device. The terminal device may perform packet assembly based on a second parameter to obtain the second data, where the second parameter indicates a size of a transport block obtained through packet assembly performed based on the second uplink grant corresponding to the second access network device or the first access network device. In this way, the first data is sent to the first access network device based on the first uplink grant, and the second data is sent to the second access network device based on the second uplink grant corresponding to the second access network device, without using the second uplink grant corresponding to the first access network device. The second parameter may be configured by an access network device by using an RRC message or indicated by using DCI, and the second parameter includes at least one of the following: a size of a TB and a modulation and coding scheme.

As shown in FIG. 8, a UE has two uplink grants, that is, a DG and a CG, and the DG and the CG overlap in time domain positions. The UE determines that the DG corresponds to a TRP 1, and the CG 1 corresponds to the TRP 1 and a TRP 2. Because the CG and the DG correspond to the same TRP 1, and a priority of the DG is higher than a priority of the CG, the UE cannot send uplink data to the TRP 1 based on the CG to the TRP 1. The UE may perform packet assembly based on the DG to obtain a TB 1, and perform packet assembly based on the second parameter and based on the CG to the TRP 2 to obtain a TB 2. In this way, the UE may simultaneously send the TB 1 to the TRP 1 based on the DG and send the TB 2 to the TRP 2 based on the CG.

In another implementation, because the first uplink grant and the second uplink grant correspond to the same first access network device, and the first priority of the first uplink grant is higher than the second priority of the second uplink grant, uplink data cannot be sent based on the second uplink grant corresponding to the first access network device. If packet assembly is performed based on the first parameter, there is a large quantity of content payloads. If the uplink data is sent only based on the second uplink grant corresponding to the second access network device, incorrect decoding may occur, resulting in a data transmission failure. Therefore, the terminal device may determine whether packet assembly performed based on the first parameter is completed. If packet assembly performed based on the first parameter is not completed, the terminal device performs packet assembly based on the second parameter to obtain the second data. In this way, the first data is sent to the first access network device based on the first uplink grant, and the second data is sent to the second access network device based on the second uplink grant corresponding to the second access network device, without using the second uplink grant corresponding to the first access network device. If packet assembly performed based on the first parameter has been completed, the first data may be sent to the first access network device only based on the first uplink grant. A second uplink grant in next duration of the second uplink grant is waited for, and if a priority of the second uplink grant in the next duration is higher than that of another uplink grant, the second data may be sent based on the second uplink grant in the next duration. Alternatively, after the second uplink grant in the next duration is waited for, the second data is preferentially sent based on the second uplink grant in the next duration. In other words, priority determining does not need to be performed again, but the second uplink grant in the next duration through which the second data is to be sent is considered as an uplink grant with a highest priority.

Optionally, if the first uplink grant and the second uplink grant correspond to the same first access network device, the second uplink grant further corresponds to the second access network device, and the first priority of the first uplink grant is higher than the second priority of the second uplink grant, the first data is sent to the first access network device based on the first uplink grant, and the second data is not sent to the first access network device or the second access network device based on the second uplink grant, or the second uplink grant in the next duration of the second uplink grant is waited for to send the second data to the first access network device or the second access network device.

FIG. 9 is a diagram of another type of uplink data transmission. A UE has two uplink grants, that is, a DG and a CG, and the DG and the CG overlap in time domain positions. The UE determines that the DG corresponds to a TRP 1, the CG 1 corresponds to the TRP 1 and a TRP 2, and the DG and the CG correspond to the same TRP 1. Because a priority of the DG is higher than a priority of the CG, the UE sends a TB 1 to the TRP 1 based on the DG, and does not send a TB 2 to the TRP 1 or the TRP 2 based on the CG.

Optionally, if the first uplink grant and the second uplink grant correspond to the same first access network device, the second uplink grant further corresponds to the second access network device, and the first priority of the first uplink grant is lower than or equal to the second priority of the second uplink grant, the second data is sent to the second access network device based on the second uplink grant, and fourth data is sent to the first access network device based on the second uplink grant, where the fourth data and the second data belong to a same transport block. The first data is not sent to the first access network device based on the first uplink grant, or a first uplink grant in next duration of the first uplink grant is waited for to send the first data.

For example, if the UE has two uplink grants CGs, the CGs are denoted as a CG 1 and a CG 2. The CG 1 corresponds to mTRP transmission (for example, corresponding to a TRP 1 and a TRP 2), the CG 2 corresponds to single TRP transmission (for example, the TRP 1), and the CG 1 and the CG 2 overlap in time domain positions. When a priority of the CG 1 is the same as a priority of the CG 2, because the CG 1 corresponds to the mTRP transmission, the CG 1 corresponding to the mTRP transmission may be used as an uplink grant with a high priority. The UE performs packet assembly based on the CG 1 to the TRP 1 and the CG 1 to the TRP 2, to obtain a first stream of a TB 1 and a second stream of the TB 1, respectively sends the first stream of the TB 1 to the TRP 1 based on the CG 1 and sends the second stream of the TB 1 to the TRP 2 based on the CG 1, and does not send uplink data to the TRP 1 based on the CG 2. Alternatively, when a priority of the CG 1 is higher than a priority of the CG 2, the UE preferentially respectively sends the first stream of the TB 1 to the TRP 1 based on the CG 1 and sends the second stream of the TB 1 to the TRP 2 based on the CG 1, and does not send the TB 2 to the TRP 1 based on the CG 2.

Optionally, if the first uplink grant and the second uplink grant correspond to the same first access network device, and the second uplink grant further corresponds to the second access network device, the second uplink grant corresponding to the first access network device and the second access network device may be used as an uplink grant with a high priority. The second data is sent to the second access network device based on the second uplink grant, and fourth data is sent to the first access network device based on the second uplink grant, where the fourth data and the second data belong to a same transport block. The first data is not sent to the first access network device based on the first uplink grant, or a first uplink grant in next duration of the first uplink grant is waited for to send the first data.

For example, if a UE has two uplink grants CGs, the CGs are denoted as a CG 1 and a CG 2. The CG 1 corresponds to mTRP transmission (for example, corresponding to a TRP 1 and a TRP 2), the CG 2 corresponds to single TRP transmission (for example, the TRP 1), and the CG 1 and the CG 2 overlap in time domain positions. The UE uses the CG 1 corresponding to the mTRP transmission as an uplink grant with a high priority. The UE performs packet assembly based on the CG 1 to the TRP 1 and the CG 1 to the TRP 2, to obtain a first stream of a TB 1 and a second stream of the TB 1, respectively sends the first stream of the TB 1 to the TRP 1 based on the CG 1 and sends the second stream of the TB 1 to the TRP 2 based on the CG 1, and does not send the TB 2 to the TRP 1 based on the CG 2, or the UE waits for a next CG 2 to send the TB 2 to the TRP 1.

In this embodiment of this application, for a plurality of uplink grants that overlap in time domain positions, if an uplink grant with a high priority and an uplink grant with a low priority correspond to a same access network device, and the uplink grant with a low priority further corresponds to another access network device, uplink data may be sent to the another access network device based on the uplink grant with a low priority, thereby improving communication resource utilization, and improving communication capacity and reliability.

It should be noted that if an uplink grant and an uplink message overlap in time domain positions and correspond to a same access network device or different access network devices, uplink data or the uplink message may also be sent according to the foregoing rule. The uplink message may include a data channel PUSCH, a control channel PUCCH, and a reference signal SRS. In addition, the foregoing two embodiments may be used together, or may be used independently, and both fall within the protection scope of this application.

It may be understood that in the foregoing method embodiments, the methods and operations implemented by the terminal device may alternatively be implemented by a component (for example, a chip or a circuit) that can be used in the terminal device.

In embodiments of this application, the terminal device may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely logical function division. During actual implementation, another division manner may be used. Descriptions are provided below by using an example in which each functional module is obtained through division corresponding to each function.

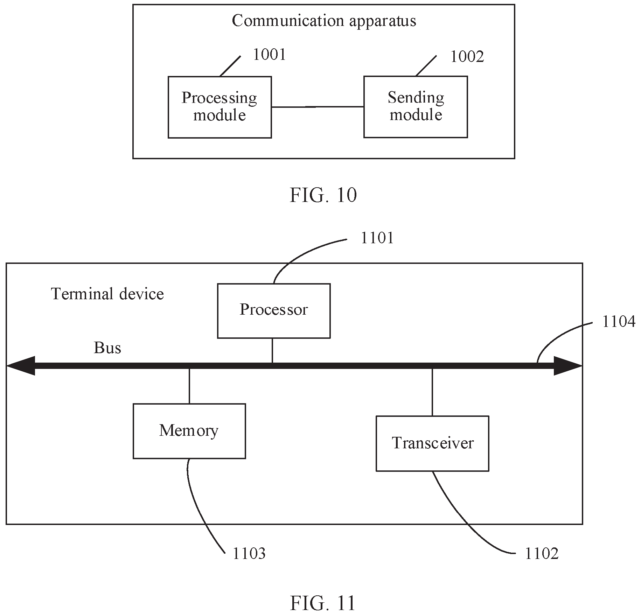

The foregoing describes in detail the method provided in embodiments of this application with reference to FIG. 5 and FIG. 7. The following describes in detail a communication apparatus provided in an embodiment of this application with reference to FIG. 10. It should be understood that descriptions of an apparatus embodiment correspond to descriptions of method embodiments. Therefore, for content that is not described in detail, refer to the foregoing method embodiments. For brevity, details are not described herein again.

FIG. 10 is a diagram of a structure of a communication apparatus according to an embodiment of this application. The communication apparatus may include a processing module 1001 and a sending module 1002.

Optionally, the communication apparatus may implement steps or procedures performed by the terminal device corresponding to the foregoing method embodiments, for example, may be a terminal device, or a chip or a circuit configured in the terminal device. The sending module 1002 is configured to perform receiving and sending-related operations on a terminal device side in the foregoing method embodiments, and the processing module 1001 is configured to perform processing-related operations of the terminal device in the foregoing method embodiments.

In an embodiment:
the processing module 1001 is configured to determine whether a first uplink grant and a second uplink grant correspond to a same access network device, where the first uplink grant and the second uplink grant overlap in time domain positions; and
the sending module 1002 is configured to: if the first uplink grant and the second uplink grant correspond to different access network devices, send first data to a first access network device based on the first uplink grant, and send second data to a second access network device based on the second uplink grant; or
the sending module 1002 is further configured to: if the first uplink grant and the second uplink grant corresponding to the same access network device, send third data to a third access network device based on the first uplink grant, or send fourth data to the third access network device based on the second uplink grant.

Optionally, the processing module 1001 is further configured to: determine whether a first identity associated with the first uplink grant is the same as a second identity associated with the second uplink grant; and if the first identity is the same as the second identity, determine that the first uplink grant and the second uplink grant correspond to the same access network device; or if the first identity is different from the second identity, determine that the first uplink grant and the second uplink grant correspond to different access network devices.

The first identity or the second identity is a control resource set pool index.

Optionally, the processing module 1001 is further configured to: determine whether a first transmission configuration indication TCI state associated with the first uplink grant is the same as a second TCI state associated with the second uplink grant; and if the first TCI state is the same as the second TCI state, determine that the first uplink grant and the second uplink grant correspond to the same access network device; or if the first TCI state is different from the second TCI state, determine that the first uplink grant and the second uplink grant correspond to different access network devices.

Optionally, the processing module 1001 is further configured to: determine whether a first reference signal associated with the first uplink grant is the same as a second reference signal associated with the second uplink grant; and if the first reference signal is the same as the second reference signal, determine that the first uplink grant and the second uplink grant correspond to the same access network device; or if the first reference signal is different from the second reference signal, determine that the first uplink grant and the second uplink grant correspond to different access network devices.

Optionally, the processing module 1001 is further configured to: determine whether a first reference signal set associated with the first uplink grant is the same as a second reference signal set associated with the second uplink grant; and if the first reference signal set is the same as the second reference signal set, determine that the first uplink grant and the second uplink grant correspond to the same access network device; or if the first reference signal set is different from the second reference signal set, determine that the first uplink grant and the second uplink grant correspond to different access network devices.

Optionally, the processing module 1001 is further configured to: determine a first priority of the first uplink grant and a second priority of the second uplink grant; and based on the first priority and the second priority, send the third data to the third access network device based on the first uplink grant, or send the fourth data to the third access network device based on the second uplink grant.

Optionally, the processing module 1001 is further configured to: obtain a priority of a first logical channel of the third data and a priority of a second logical channel of the fourth data; and determine the first priority of the first uplink grant and the second priority of the second uplink grant based on the priority of the first logical channel and the priority of the second logical channel.

The first uplink grant is a dynamic uplink grant DG or a pre-configured uplink grant CG, and the second uplink grant is a DG or a CG.

In another embodiment:
the processing module 1001 is configured to determine whether a first uplink grant and a second uplink grant correspond to a same access network device, where the first uplink grant and the second uplink grant overlap in time domain positions; and
the sending module 1002 is configured to: if the first uplink grant and the second uplink grant correspond to a same first access network device, and the second uplink grant further corresponds to a second access network device, determine a first priority of the first uplink grant and a second priority of the second uplink grant, and
the sending module 1002 is further configured to: if the first priority is higher than the second priority, send first data to the first access network device based on the first uplink grant, and send second data to the second access network device based on the second uplink grant.

Optionally, the processing module 1001 is further configured to perform packet assembly based on a first parameter to obtain the second data and third data, where the first parameter indicates a size of a transport block obtained through packet assembly performed based on the second uplink grant corresponding to the first access network device and the second access network device, and the third data and the second data belong to a same transport block.

The sending module 1002 is further configured to send the third data to the first access network device or the second access network device based on a second uplink grant in next duration of the second uplink grant.

Optionally, the processing module 1001 is further configured to perform packet assembly based on a second parameter to obtain the second data, where the second parameter indicates a size of a transport block obtained through packet assembly performed based on the second uplink grant corresponding to the second access network device.

Optionally, the processing module 1001 is further configured to determine whether packet assembly performed based on a first parameter is completed, where the first parameter indicates a size of a transport block obtained through packet assembly performed based on the second uplink grant corresponding to the first access network device and the second access network device; and if packet assembly performed based on the first parameter is not completed, perform packet assembly based on the second parameter to obtain the second data.

Optionally, the sending module 1002 is further configured to: if the first priority is lower than or equal to the second priority, send the second data to the second access network device based on the second uplink grant, and send fourth data to the first access network device based on the second uplink grant, where the fourth data and the second data belong to a same transport block.

Optionally, the processing module 1001 is further configured to determine whether a first transmission configuration indication TCI state associated with the first uplink grant is the same as a second TCI state associated with the second uplink grant; and
if the first TCI state is the same as the second TCI state, determine that the first uplink grant and the second uplink grant correspond to the same access network device; or if the first TCI state is different from the second TCI state, determine that the first uplink grant and the second uplink grant correspond to different access network devices.

Optionally, the processing module 1001 is further configured to determine whether a first reference signal associated with the first uplink grant is the same as a second reference signal associated with the second uplink grant; and
if the first reference signal is the same as the second reference signal, determine that the first uplink grant and the second uplink grant correspond to the same access network device; or if the first reference signal is different from the second reference signal, determine that the first uplink grant and the second uplink grant correspond to different access network devices.

Optionally, the processing module 1001 is further configured to determine whether a first reference signal set associated with the first uplink grant is the same as a second reference signal set associated with the second uplink grant; and
if the first reference signal set is the same as the second reference signal set, determine that the first uplink grant and the second uplink grant correspond to the same access network device; or if the first reference signal set is different from the second reference signal set, determine that the first uplink grant and the second uplink grant correspond to different access network devices.

The first uplink grant is a dynamic uplink grant DG or a pre-configured uplink grant CG, and the second uplink grant is a DG or a CG.

It should be noted that, for implementation of each module, further refer to the corresponding descriptions in the method embodiments shown in FIG. 5 and FIG. 7. The method and the functions performed by the terminal device in the foregoing embodiments are performed.

FIG. 11 is a diagram of a structure of a terminal device according to an embodiment of this application. The terminal device may be used in the system shown in FIG. 1, to perform functions of the terminal device in the foregoing method embodiments, or implement steps or procedures performed by the terminal device in the foregoing method embodiments.

As shown in FIG. 11, the terminal device includes a processor 1101 and a transceiver 1102. Optionally, the terminal device further includes a memory 1103. The processor 1101, the transceiver 1102, and the memory 1103 may communicate with each other through an internal connection path, to transfer a control signal and/or a data signal. The memory 1103 is configured to store a computer program. The processor 1101 is configured to invoke the computer program from the memory 1103 and run the computer program, to control the transceiver 1102 to send and receive a signal. Optionally, the terminal device may further include an antenna, configured to send, by using a radio signal, uplink data or uplink control signaling that is output by the transceiver 1102.

The processor 1101 and the memory 1103 may be integrated into one processing apparatus. The processor 1101 is configured to execute program code stored in the memory 1103, to implement the foregoing functions. During specific implementation, the memory 1103 may alternatively be integrated into the processor 1101, or may be independent of the processor 1101. The processor 1101 may correspond to the processing module in FIG. 10.

The transceiver 1102 may correspond to the sending module in FIG. 10, and may also be referred to as a transceiver unit or a transceiver module. The transceiver 1102 may include a receiver (which is also referred to as a receiver machine or a receiver circuit) and a transmitter (which is also referred to as a transmitter machine or a transmitter circuit). The receiver is configured to receive a signal, and the transmitter is configured to transmit a signal.

It should be understood that the terminal device shown in FIG. 11 can implement processes related to the terminal device in the method embodiments shown in FIG. 5 and FIG. 7. Operations and/or functions of the modules in the terminal device are respectively intended to implement the corresponding procedures in the foregoing method embodiments. For details, refer to the descriptions in the foregoing method embodiments. To avoid repetition, detailed descriptions are properly omitted herein.

The processor 1101 may be configured to perform an action implemented inside the terminal device as described in the foregoing method embodiments. The transceiver 1102 may be configured to perform an action of sending by the terminal device to the terminal device or an action of receiving from the terminal device as described in the foregoing method embodiments. For details, refer to the descriptions in the foregoing method embodiments. Details are not described herein again.

The processor 1101 may be a central processing unit, a general-purpose processor, a digital signal processor, an application-specific integrated circuit, a field-programmable gate array or another programmable logic device, a transistor logic device, a hardware component, or any combination thereof. The processor may implement or execute various example logical blocks, modules, and circuits described with reference to content disclosed in this application. The processor 1101 may alternatively be a combination, for example, a combination including one or more microprocessors or a combination of a digital signal processor and a microprocessor, for implementing a computing function. The communication bus 1104 may be a peripheral component interconnect standard PCI bus, an extended industry standard structure EISA bus, or the like. The bus may be classified into an address bus, a data bus, a control bus, and the like. For ease of representation, only one bold line is used to represent the bus in FIG. 11, but this does not mean that there is only one bus or only one type of bus. The communication bus 1104 is configured to implement connection and communication between these components. The transceiver 1102 in this embodiment of this application is configured to perform signaling or data communication with another node device. The memory 1103 may include a volatile memory, for example, a non-volatile dynamic random access memory (non-volatile random access memory, NVRAM), a phase change random access memory (phase change RAM, PRAM), or a magnetoresistive random access memory (magnetoresistive RAM, MRAM), and may further include a non-volatile memory, for example, at least one magnetic disk storage device, an electronically erasable programmable read-only memory (electrically erasable programmable read-only memory, EEPROM), a flash memory, for example, an NOR flash memory (NOR flash memory), or a NAND flash memory (NAND flash memory), or a semiconductor device, such as a solid-state drive (solid-state drive, SSD). Optionally, the memory 1103 may be at least one storage apparatus located away from the processor 1101. Optionally, the memory 1103 may further store a group of computer program code or configuration information. Optionally, the processor 1101 may further execute the program stored in the memory 1103. The processor may cooperate with the memory and the transceiver to perform any method performed by the first terminal device or the second terminal device and a function of the first terminal device or the second terminal device in the foregoing embodiments of this application.

An embodiment of this application further provides a chip system. The chip system includes a processor, configured to support a terminal device in implementing functions in any one of the foregoing embodiments, for example, generating or processing uplink data in the foregoing methods.

In a possible design, the chip system further includes a memory. The memory is configured to store a computer program and data that are necessary for the terminal device. The chip system may include a chip, or may include a chip and another discrete component. An input and an output of the chip system respectively correspond to a receiving operation and a sending operation of the terminal device in the method embodiments.

According to the methods provided in embodiments of this application, this application further provides a computer program product. The computer program product includes a computer program, and when the computer program is run on a computer, the computer is caused to perform the method in any one of the embodiments shown in FIG. 5 and FIG. 7.

According to the methods provided in embodiments of this application, this application further provides a computer-readable medium. The computer-readable medium stores a computer program, and when the computer program is run on a computer, the computer is caused to perform the method in any one of the embodiments shown in FIG. 5 and FIG. 7.

According to the methods provided in embodiments of this application, this application further provides a communication system. The communication system includes the foregoing one or more terminal devices and one or more access network devices.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a high-density digital video disc (digital video disc, DVD)), a semiconductor medium (for example, a solid-state disc (solid-state disc, SSD)), or the like.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method comprises:
determining whether a first uplink grant and a second uplink grant correspond to a same access network device, wherein the first uplink grant and the second uplink grant overlap in time domain positions;
if the first uplink grant and the second uplink grant correspond to a same first access network device, and the second uplink grant further corresponds to a second access network device, determining a first priority of the first uplink grant and a second priority of the second uplink grant; and
if the first priority is higher than the second priority, sending first data to the first access network device based on the first uplink grant, and sending second data to the second access network device based on the second uplink grant.

2. The method according to claim 1, wherein the method further comprises:
performing packet assembly based on a first parameter to obtain the second data and third data, wherein the first parameter indicates a size of a transport block obtained through packet assembly performed based on the second uplink grant corresponding to the first access network device and the second access network device, and the third data and the second data belong to a same transport block; and
sending the third data to the first access network device or the second access network device based on a second uplink grant in next duration of the second uplink grant.

3. The method according to claim 1, wherein the method further comprises:
performing packet assembly based on a second parameter to obtain the second data, wherein the second parameter indicates a size of a transport block obtained through packet assembly performed based on the second uplink grant corresponding to the second access network device.

4. The method according to claim 3, wherein the performing packet assembly based on the second parameter to obtain the second data comprises:
determining whether packet assembly performed based on a first parameter is completed, wherein the first parameter indicates a size of a transport block obtained through packet assembly performed based on the second uplink grant corresponding to the first access network device and the second access network device; and
if packet assembly performed based on the first parameter is not completed, performing packet assembly based on the second parameter to obtain the second data.

5. The method according to claim 1, wherein the method further comprises:
if the first priority is lower than or equal to the second priority, sending the second data to the second access network device based on the second uplink grant, and sending fourth data to the first access network device based on the second uplink grant, wherein the fourth data and the second data belong to a same transport block.

6. The method according to any one of claims 1 to 5, wherein the determining whether the first uplink grant and the second uplink grant correspond to the same access network device comprises:
determining whether a first transmission configuration indication TCI state associated with the first uplink grant is the same as a second TCI state associated with the second uplink grant; and
if the first TCI state is the same as the second TCI state, determining that the first uplink grant and the second uplink grant correspond to the same access network device; or if the first TCI state is different from the second TCI state, determining that the first uplink grant and the second uplink grant correspond to different access network devices.

7. The method according to any one of claims 1 to 5, wherein the determining whether the first uplink grant and the second uplink grant correspond to the same access network device comprises:
determining whether a first reference signal associated with the first uplink grant is the same as a second reference signal associated with the second uplink grant; and
if the first reference signal is the same as the second reference signal, determining that the first uplink grant and the second uplink grant correspond to the same access network device; or if the first reference signal is different from the second reference signal, determining that the first uplink grant and the second uplink grant correspond to different access network devices.

8. The method according to any one of claims 1 to 5, wherein the determining whether the first uplink grant and the second uplink grant correspond to the same access network device comprises:
determining whether a first reference signal set associated with the first uplink grant is the same as a second reference signal set associated with the second uplink grant; and
if the first reference signal set is the same as the second reference signal set, determining that the first uplink grant and the second uplink grant correspond to the same access network device; or if the first reference signal set is different from the second reference signal set, determining that the first uplink grant and the second uplink grant correspond to different access network devices.

9. The method according to any one of claims 1 to 8, wherein the first uplink grant is a dynamic uplink grant DG or a pre-configured uplink grant CG, and the second uplink grant is a DG or a CG.

10. A communication method, wherein the method comprises:
determining whether a first uplink grant and a second uplink grant correspond to a same access network device, wherein the first uplink grant and the second uplink grant overlap in time domain positions; and
if the first uplink grant and the second uplink grant correspond to different access network devices, sending first data to a first access network device based on the first uplink grant, and sending second data to a second access network device based on the second uplink grant; or
if the first uplink grant and the second uplink grant correspond to the same access network device, sending third data to a third access network device based on the first uplink grant, or sending fourth data to the third access network device based on the second uplink grant.

11. The method according to claim 10, wherein the determining whether the first uplink grant and the second uplink grant correspond to the same access network device comprises:
determining whether a first identity associated with the first uplink grant is the same as a second identity associated with the second uplink grant; and
if the first identity is the same as the second identity, determining that the first uplink grant and the second uplink grant correspond to the same access network device; or if the first identity is different from the second identity, determining that the first uplink grant and the second uplink grant correspond to different access network devices.

12. The method according to claim 11, wherein the first identity or the second identity is a control resource set pool index.

13. The method according to claim 10, wherein the determining whether the first uplink grant and the second uplink grant correspond to the same access network device comprises:
determining whether a first transmission configuration indication TCI state associated with the first uplink grant is the same as a second TCI state associated with the second uplink grant; and
if the first TCI state is the same as the second TCI state, determining that the first uplink grant and the second uplink grant correspond to the same access network device; or if the first TCI state is different from the second TCI state, determining that the first uplink grant and the second uplink grant correspond to different access network devices.

14. The method according to claim 10, wherein the determining whether the first uplink grant and the second uplink grant correspond to the same access network device comprises:
determining whether a first reference signal associated with the first uplink grant is the same as a second reference signal associated with the second uplink grant; and
if the first reference signal is the same as the second reference signal, determining that the first uplink grant and the second uplink grant correspond to the same access network device; or if the first reference signal is different from the second reference signal, determining that the first uplink grant and the second uplink grant correspond to different access network devices.

15. The method according to claim 10, wherein the determining whether the first uplink grant and the second uplink grant correspond to the same access network device comprises:
determining whether a first reference signal set associated with the first uplink grant is the same as a second reference signal set associated with the second uplink grant; and
if the first reference signal set is the same as the second reference signal set, determining that the first uplink grant and the second uplink grant correspond to the same access network device; or if the first reference signal set is different from the second reference signal set, determining that the first uplink grant and the second uplink grant correspond to different access network devices.

16. The method according to any one of claims 10 to 15, wherein the sending the third data to the third access network device based on the first uplink grant, or sending the fourth data to the third access network device based on the second uplink grant comprises:
determining a first priority of the first uplink grant and a second priority of the second uplink grant; and
based on the first priority and the second priority, sending the third data to the third access network device based on the first uplink grant, or sending the fourth data to the third access network device based on the second uplink grant.

17. The method according to claim 16, wherein the determining the first priority of the first uplink grant and the second priority of the second uplink grant comprises:
obtaining a priority of a first logical channel of the third data and a priority of a second logical channel of the fourth data; and
determining the first priority of the first uplink grant and the second priority of the second uplink grant based on the priority of the first logical channel and the priority of the second logical channel.

18. The method according to any one of claims 10 to 17, wherein the first uplink grant is a dynamic uplink grant DG or a pre-configured uplink grant CG, and the second uplink grant is a DG or a CG.

19. A communication apparatus, comprising a memory and a processor, wherein the memory is configured to store a computer program, and the processor runs the computer program, to cause the communication apparatus to perform the method according to any one of claims 1 to 9 or the method according to any one of claims 10 to 18.

20. A computer-readable storage medium, wherein the computer-readable storage medium comprises a computer program, and when the computer program is run by a processor, the method according to any one of claims 1 to 18 is implemented.

21. A chip, wherein the chip comprises a processor and a communication interface, the communication interface is configured to communicate with an external component or an internal component, and the processor is configured to implement the method according to any one of claims 1 to 18.
